Europäisches Patentamt

European Patent Office  (11) Publication number:  **0 103 994**

Office européen des brevets  **B1**

(12)  **EUROPEAN PATENT SPECIFICATION**

(45) Date of publication of patent specification: 02.07.86  (51) Int. Cl.⁴: **A 23 L 1/237**

(21) Application number: 83304834.1

(22) Date of filing: 22.08.83

(54) Flavorings for sodium chloride substitutes.

(30) Priority: 23.08.82 US 410263

(43) Date of publication of application:
28.03.84 Bulletin 84/13

(45) Publication of the grant of the patent:
02.07.86 Bulletin 86/27

(84) Designated Contracting States:
AT BE CH DE FR GB IT LI LU NL SE

(56) References cited:
US-A-3 860 732
US-A-4 066 799
US-A-4 297 375

(73) Proprietor: HERCULES INCORPORATED
Hercules Plaza
Wilmington Delaware 19894 (US)

(72) Inventor: Murray, Daniel Gardner
1205 Clyde Drive
Naperville Illinois 60540 (US)
Inventor: Shackelford, John Riley
918 South 6th Avenue
La Grange Illinois 60525 (US)

(74) Representative: Ritter, Stephen David et al
Mathys & Squire 10 Fleet Street
London EC4Y 1AY (GB)

Courier Press, Leamington Spa, England.

## Description

This invention relates to a sodium chloride substitute flavoring system comprising autolyzed yeast and ammonium chloride which improves the saltiness of foods, reduces the bitterness of sodium chloride substitutes and is suitable for use in a sodium chloride substitute system for processed meats and snack foods. More particularly, this invention relates to a sodium chloride substitute flavoring system comprising autolyzed yeast, ammonium chloride and potassium chloride and the use of the system in the preparation of a low sodium frankfurter.

The use of sodium salt, namely sodium chloride, has long been suspected as a cause of health problems, particularly hypertension. Although a cause-effect relationship between excessive sodium ingestion and hypertension has apparently not been established, it is known that a reduction of sodium intake alone will accomplish a reduction in the hypertensive state.

With growing consumer awareness and a more active presence by the FDA in the labelling requirements for the use of sodium salts, private industry is now concerned with the amount of sodium chloride they are adding to their food products. Presently many food product manufacturers are adding sodium chloride directly to their food system. In addition, a large percentage of the purchased ingredients used in formulating food products also contains sodium chloride. In some instances, the sodium chloride content can be as high as 50% by weight on a dry solids basis of the food ingredient. (Hereinafter all references to weight, percent by weight or parts by weight will be on a dry solids basis unless otherwise indicated).

To some degree the problem of high sodium levels in foods can be reduced by simply lowering the level of sodium chloride added to the food product formulations. But unfortunately the level of sodium chloride in most cases cannot be lowered due to preservation requirements and the necessity of from 0.5% to 2.5% by weight of sodium chloride in the food product for flavor requirements.

To effect a reduction in sodium chloride or the sodium ion, many food processors have employed potassium chloride as a sodium chloride substitute. However, potassium chloride is easily discernable from sodium chloride, or table salt, by most humans. In some societies the flavor of potassium chloride is readily accepted, but in the United States, Europe, and Asia the flavor is unacceptable. Although potassium chloride is perceived as being salty, the potassium ion imparts an "off" flavor most often described as bitter. The reason for bitterness perception with potassium salt and not with sodium salt is not generally understood, but the perceptor sites located on the tongue where saltiness is perceived can readily distinguish potassium from sodium and this difference is physiologically perceived as a difference in bitterness intensity. Because of the difference in flavor between potassium chloride and sodium chloride, it is necessary to employ additives in sodium chloride substitutes to minimize this flavor difference.

For example, U.S. Pat. No. 3,860,732 (Eisenstadt) discloses a sodium chloride substitute having reduced bitterness containing potassium chloride, or potassium chloride and ammonium chloride, in admixture with lactose or dextrose or both and cream of tartar.

U.S. Pat. No. 4,066,799 (Cornelius et al.) discloses a sodium chloride substitute containing a glycinamide salt in mixture with a flavor potentiator such as glutamic acid, monosodium glutamate, etc.

U.S. Pat. No. 3,782,974 (Lontz et al.) discloses a sodium chloride substitute formulation containing defined proportions of ascorbic acid, fumaric acid, and citric acid.

U.S. Pat. No. 3,505,082 (Miller) discloses a sodium chloride substitute comprising potassium chloride and a minor proportion of fumaric acid.

Commonly assigned U.S. Pat. No. 4,297,375 (Shackelford) discloses a sodium salt substitute having reduced bitterness containing autolyzed yeast and potassium chloride.

Although Shackelford has made substantial advances towards solving the problem of the bitterness associated with the use of potassium chloride, the problem of salt flavor intensity still exists. Potassium chloride has less salt flavor intensity than sodium chloride. Generally, increasing the amount of potassium chloride to match the salt flavor intensity of sodium chloride is not a solution to this problem because the bitter flavor also increases. Shackelford discloses that the amount of yeast necessary to effectively reduce the bitter flavor of the potassium chloride varies greatly from one food system to another. The amount of autolyzed yeast relative to the amount of potassium chloride can exceed 300% by weight. Therefore, in several food systems the use of this salt substitute is limited because a yeasty flavor is detected by some people before the desired salt intensity is achieved. The loss in salt flavor intensity due to the use of potassium chloride needs to be compensated for.

Other chloride salts, such as calcium chloride, magnesium chloride, lithium chloride and ammonium chloride have also been suggested as possible substitutes for sodium chloride. As with potassium chloride, potential use of these salts is restricted by unacceptable flavor. Commercial use of the sodium chloride substitutes is further restricted to those substances having FDA approval. Presently, potassium chloride and ammonium chloride are both recognized as safe. Eisenstadt alleges that commercial sodium chloride substitutes generally contain potassium chloride or mixtures of potassium chloride and ammonium chloride. The ammonium chloride gives a stronger, less acceptable, flavor when used alone; but, when added to potassium chloride, can result in a saltier flavor than potassium chloride alone. Use of the mixture is still limited, because unacceptable flavor results before desired salt intensity is achieved.

In the processed meat industry, sodium chloride performs more than just a flavoring function. It is a principal ingredient for purposes of preservation and texturization. High sodium chloride concentrations inhibit bacterial growth. Sodium chloride concentration also effects the water-holding capacity and emulsifying properties of meat protein. It plays a key role in the formation of stable emulsions which directly effect the texture of processed meats. Several recent studies have concluded that sodium chloride replacement in processed meat products by conventional sodium chloride substitutes is limited due to undesirable effects on flavor, texture, and bacterial growth rate. For example, D. G. Olson and R. N. Terrell stated in "Sensory Properties of Processed Meats Using Various Sodium Salt Substitutes" presented at the 1981 Meat Industry Research Conference, March 26—28, Am. Meat Inst., Arlington, Virginia, that partial replacement of sodium chloride with potassium chloride, an accepted salt substitute, must not exceed 50% because of significant increases in the bitterness of the product. D. L. Seman, D. G. Olson and R. W. Mandigo have found that in order to form stable emulsions, replacement of sodium chloride with potassium chloride is limited to one half of the normal level of sodium chloride. "Effect of Reduction and Partial Replacement of Sodium on Bologna Characteristics and Acceptability", *J. of Food Science*, 45, 1980, pp. 1116—1121. R. N. Terrell reports that when fifty percent of the normal level of sodium chloride in processed meat products is replaced with potassium chloride, a significant increase is seen in the growth of the bacteria lactobacillus, the common cause of acid-spoiled odors and flavors in processed meats. "Reduction or Replacement of Salt in Processed Meats" presented at the 24th Annual Meat Science Inst., Univ. of Georgia, Athens, Georgia, March 14—17, 1982. Therefore, there is a need for a sodium chloride substitute system capable of permitting reduction of sodium chloride content without producing undesirable effects on flavor, texture, and bacterial growth.

The general object of this invention is to provide a sodium chloride substitute flavoring system which imparts enhanced salt flavor intensity to foods without adding any significant quantity of sodium to the foods, while reducing the bitterness of sodium chloride substitutes. Another object of this invention is to provide a sodium chloride substitute system which has an enhanced salt flavor intensity and reduced bitterness. Another object of this invention is to provide a sodium chloride substitute system for use in processed meat products which has suitable preservation and texturing properties.

Other objects and advantages of the present invention will be apparent from a further reading of the specification and of the appended claims.

We have found that combining autolyzed yeast with ammonium chloride results in a sodium chloride substitute flavoring system which, surprisingly, enhances salt flavor intensity. The system both reduces the bitterness of, and enhances the saltiness of, potassium chloride, and, when incorporated into processed meats, aids in solubilization of proteins and texturization, and effectively suppresses bacterial growth. In a preferred embodiment, the ammonium chloride is co-processed with autolyzed yeast. Co-processing ammonium chloride and autolyzed yeast requires that the two elements are combined in the presence of a liquid, preferably water, and then dried. The advantage to co-processing ammonium chloride with the autolyzed yeast is the close proximation of the active ingredients which further enhances the salt flavor intensity and reduces the bitterness of the sodium chloride substitute.

The autolyzed yeast useful in the various aspects of this invention can be prepared in the conventional manner well known in the art. In particular, a slurry or cream of active yeast cells (5—30 weight percent solids) can be plasmolyzed with up to 6 weight percent sodium chloride (based on cell dry weight). Ethyl acetate can be added as an antiseptic at 1% by volume to prevent bacterial growth. The slurry can be heated to 30—60°C and held at that temperature for about 10—50 hours, or until the desired degree of solubilization is achieved. The resulting autolyzed yeast can then be pasteurized, centrifuged, and dried to a powdery product.

A preferred yeast autolyzate can be prepared in the conventional manner as set forth above, but with the addition of an exogenous enzyme such as papain, ficin, bromelain, pancreatin, or aspergillus protease to assist in the yeast cell digestion. U.S. Patent No. 4,218,481 to Chao et al. discloses an autolysis process in which exogenous enzymes are added to the yeast slurry in concentrations of from 0.01 to 1.0 percent by weight, resulting in a shorter digestion time. Accordingly, for purposes herein, the term "autolyzed yeast" includes such autolyzed yeasts produced with the aid of exogenous enzymes.

The source of yeast can be chosen from several yeast species. *Candida utilis, Saccharomyces cerevisiae, Saccharomyces carlsbergensis, Saccharomyces uvarum, Kluyveromyces fragilis* and *Candida lipolytica* are preferred yeasts because of their current acceptance for food uses.

Co-processing the ammonium chloride with the autolyzed yeast can be achieved by several means. The ammonium chloride can be added as a salt or formed by adding an ammonium compound and then adding hydrochloric acid to form the ammonium salt. The salt can be added to the yeast at any of several stages during the autolysis process. It can be added to the slurry or cream of active cells; it can be added during plasmolysis; or it can be added just prior to pasteurization or drying. Autolyzed yeast which has already been dried may be resuspended in an aqueous medium and the salt may then be added. In the preferred embodiment, ammonium chloride is added directly to the slurry or cream of active cells so that it can aid in plasmolysis of the cells. Co-processing the ammonium chloride and autolyzed yeast results in increased salt flavor intensity and reduced yeast flavor intensity when compared to simple combinations of the two components. In salt substitute systems using ammonium chloride, potassium chloride and autolyzed yeast, potassium chloride can also be co-processed with the other two components in the

manner described above. Co-processing of the ammonium chloride alone with the autolyzed yeast is preferred, however, as it maximizes the salt flavor intensity.

The ratio of autolyzed yeast to ammonium chloride in the sodium chloride substitute flavoring system is dependent upon the food system. Generally, however, the amount of autolyzed yeast relative to the amount of ammonium chloride is in the range from about 95 percent to greater than 60 percent by weight. Ratios of autolyzed yeast relative to ammonium chloride greater than 95% result in less salt flavor intensity with increasing yeasty flavor whereas ratios lower than 60% have too strong of an ammonium chloride flavor and tend to leave a bitter aftertaste. The preferred ratio of autolyzed yeast to ammonium chloride in a basic flavoring system is about four parts to about one part by weight. Preferred amounts for each food system can be readily determined without undue experimentation.

The amount of the sodium chloride substitute flavoring system utilized also varies according to the particular food system in which it is being used. When the flavoring system is used in conjunction with potassium chloride, routine experimentation will determine the quantity of the additive which is necessary to disguise the bitterness of the potassium chloride while providing the desired salt flavor intensity. The ratio of the components in the salt substitute system can range from 0.5 to 20 parts by weight potassium chloride to one part by eight co-processed autolyzed yeast and ammonium chloride (20%). Smaller ratios result in a very salty flavor which has harsh flavor notes from the ammonium chloride. When larger ratios are used the bitterness of potassium chloride becomes a problem. A more preferable range is from 0.75 to 11.0 parts by weight potassium chloride to one part by weight co-processed autolyzed yeast and ammonium chloride (20%). The preferred ratio for a basic sodium chloride substitute is 2.25 parts potassium chloride to one part co-processed autolyzed yeast and ammonium chloride (20%).

In processed meat products, the sodium chloride substitute flavoring system can be used in conjunction with potassium chloride to replace up to two-thirds of the sodium chloride while maintaining acceptable flavors, texture and low bacterial growth. A preferred formula replaces one-half of the sodium chloride with potassium chloride, co-processed autolyzed yeast and potassium chloride (32%), and co-processed autolyzed yeast and ammonium chloride (20%) in a ratio of 3.33 parts to 5 parts to one part by weight.

The following examples are given to further illustrate the present invention. The scope of the invention is not, however, meant to be limited to the specific details of the examples.

Example I

10.4 kg (Twenty-three lbs) of yeast cream (*Candida utilis*) containing 19.75% solids on a dry weight basis were heated in a 114 litre (30 gallon) jacketed tank to 54°C (130°F). To this were added 4.1 grams of crude papain. The mixture was stirred for 20 hours while maintaining the temperature at 54°C (130°F) to allow autolysis. 0.5 kg (1.14 lbs) of ammonium chloride were added and thoroughly mixed. The mixture was brought to a temperature of 77°C (170°F) for pasteurization and then drum dried under 39 kg (85 lbs) of steam pressure. The resultant product was a free-flowing granular material with saltiness and less than 0.08 percent by weight sodium. Tests were performed on this co-processed blend of autolyzed yeast and ammonium chloride in Examples IV through X below.

Example II

10.4 kg (Twenty-three lbs) of yeast cream (*Candida utilis*) containing 19.75% solids on a dry weight basis and 0.5 kg (1.14 lbs) of ammonium chloride were heated in a 30 gallon jacketed tank to 54°C (130°F). To this were added 4.1 grams of crude papain. The mixture was stirred and held for 16 hours at 54°C (130°F) to allow autolysis of the yeast. The mixture was then pasteurized at 170°F and drum dried under 39 kg (85 lbs) of steam pressure.

Example III

A commercially available salt substitute, ZYEST-45®, is prepared in the following manner: A yeast cream (*Candida utilis*) containing 19.75% solids on a dry weight basis is heated to 54°C (130°F) and 0.2% by weight of crude papain is added. The mixture is stirred and held at a constant temperature for 20 hours to allow autolysis. Potassium chloride is added to the mixture in amounts equal to 32% on a dry weight basis. The mixture is thoroughly mixed, pasteurized for two minutes at 79°C (175°F), and then drum dried under 36 kg (80 lbs) of steam pressure to form sheets. The sheets are then milled to produce the final product.

Example IV

Chicken broth was prepared by bringing to a boil 90 parts of water. To the boiling water was added 10 parts of mechanically deboned chicken meat. The blend was filtered to remove unsoluble chicken meat.

The following blends were prepared (quantitites represent parts by weight):

**0 103 994**

| | A* | B** |
|---|---|---|
| Broth | 100.00 | 100.00 |
| Autolyzed yeast | 0.61 | 0.75 |
| Total chlorides | 0.093 | 0.093 |

*Co-processed blend of autolyzed yeast and potassium chloride of Example III.
**Co-processed blend of autolyzed yeast and ammonium chloride of Example I.

Levels of A and B were adjusted for equal Total chlorides. Three trained panelists were asked to compare A and B; then, to add chicken broth to the sample with the most salt flavor intensity until both samples were equal.

Salt flavor intensity

| | A | B |
|---|---|---|
| Total chlorides | 0.093 | 0.093 |
| Flavor intensity | 1.000 | 1.750 |

B contributes the most salt flavor intensity as shown above. Based on these results, it can be seen that the combination of ammonium chloride and autolyzed yeast versus potassium chloride and autolyzed yeast has more salt flavor intensity.

Example V

The following examples illustrate the benefit derived from co-processing the ammonium chloride with the autolyzed yeast.

Chicken broth was prepared as in Example IV. Three blends were prepared and a sensor analysis for salt intensity, bitterness and yeasty flavor completed. The blends were formulated as follows (quantities represent parts by weight):

| | 1 | 2 | 3 |
|---|---|---|---|
| Chicken broth | 100.0 | 100.0 | 100.0 |
| Autolyzed yeast | 0.8 | — | — |
| Ammonium chloride | 0.2 | — | 0.2 |
| Co-processed ammonium chloride and autolyzed yeast | — | 1.0 | — |

Three trained panelists completed the sensory analysis. Results were:

| | 1 | 2 | 3 |
|---|---|---|---|
| Bitterness intensity | Low | Low | Medium |
| Salt intensity | Medium | High | Low |
| Yeast flavor intensity | Medium | Low | None |

Autolyzed yeast reduced the bitterness or harsh·flavor from ammonium chloride. Co-processing the ammonium chloride and autolyzed yeast resulted in:
1. more salt flavor intensity, and
2. reduced yeast flavor intensity.

5

Example VI

A chicken broth was prepared as shown in Example IV.

The broth was blended as follows (quantities represent parts by weight):

|  | 1 | 2 | 3 |
|---|---|---|---|
| Chicken broth | 100.0 | 100.0 | 100.0 |
| Potassium chloride | 1.0 | 1.0 | 1.0 |
| Ammonium chloride | — | 0.2 | — |
| Autolyzed yeast | — | 0.8 | — |
| Co-processed autolyzed yeast and ammonium chloride | — | — | 1.0 |

Three trained panelists were asked to complete a sensory test:

|  | 1 | 2 | 3 |
|---|---|---|---|
| Bitterness intensity | High | Medium | Low |
| Salt flavor intensity | Low | Medium | High |

The bitterness due to potassium chloride and ammonium chloride was shown to vary among the three examples. The bitterness was at the minimum where ammonium chloride and autolyzed yeast were co-processed. The presence of autolyzed yeast in Sample 2 did reduce bitterness, but this was not as effective as the conditions in Sample 3. The presence of ammonium chloride and autolyzed yeast does contribute to the salt experience over potassium chloride alone. However, this flavor enhancement is further increased by co-processing the autolyzed yeast and ammonium chloride together.

Example VII

The following example illustrates the influence of co-processed autolyzed yeast and ammonium chloride on bitterness resulting from the use of potassium chloride.

A chicken broth was prepared as in Example III. Four blends were prepared (quantities represent parts by weight):

|  | 1 | 2 | 3 | 4 |
|---|---|---|---|---|
| Chicken broth | 100.0 | 100.0 | 100.0 | 100.0 |
| Potassium chloride | 1.0 | 1.0 | 2.0 | 2.25 |
| Ammonium chloride | 0.2 | — | — | — |
| Co-processed autolyzed yeast and ammonium chloride (20%) | — | 1.0 | 1.0 | 1.0 |

Three trained panelists were asked to evaluate the four samples in terms of bitterness intensity. Initially, Samples 1 and 2 were presented to the panel who were asked which sample had more bitterness. The panel advised that Sample 1 was far more bitter than Sample 2. The three panelists were then asked to evaluate all four samples for bitterness. Samples 1 and 4 were felt to have equal bitterness. These results indicate that the bitterness flavor from potassium chloride can be stabilized even though potassium levels are increased.

Example VIII

The following example illustrates the effect of the sodium chloride substitute system on flavor and texturizations of processed meats.

Frankfurters were prepared in the following manner using the formula in Table I and the salt concentrations shown in Table II.

1. The lean beef was ground through a 0.3 cm (1/8″) plate; the jowls through a 1.3 cm (1/2″) plate.

2. Meats, salt, water/ice, dissolved nitrite and remaining ingredients were chopped until the temperature reached 4°C (40°F).

3. The mixture was run twice through an emulsifier having a 1.0 mm plate. The initial emulsion temperature was 4°C (40°F). The final emulsion temperature ranged between 15.6—16.6°C (60°—62°F).

4. The mixture was stuffed into casings (Teepak, 25RP) and linked.

5. The links were exposed to the following smokehouse process:

Fast air circulation

| | |
|---|---|
| 150°F (66°C) | 45 minutes |
| 160°/118°F (71°/48°C) | 30 minutes |
| 170°/128°F (77°/53°C) | 30 minutes |

170°/steam to 152°F internal temperature

Shower (77°/steam to 67°C)

6. Frankfurters were chilled and vacuum packaged.

TABLE I
Frankfurter formula

| Ingredients<br>Meat block | Parts by weight |
|---|---|
| Lean beef (15% fat) | 56.0 |
| Pork jowls (65% fat) | 44.0 |
| | 100.0 |
| Water/ice | 30.0 |
| Corn syrup solids | 2.0 |
| Dextrose | 1.0 |
| Liquid frank seasoning | .45 |
| Liquid smoke | .125 |
| Garlic powder | .016 |
| Sodium erythorbate | .055 |
| Sodium nitrite | .016 |

TABLE II
Salt concentrations

| Batch number | per 100 parts meat block by weight | |
|---|---|---|
| 1 | 2.5% | NaCl |
| 2 | 1.25% | NaCl |
| | 1.25 | KCl |
| 3 | 1.25% | NaCl |
| | 0.60 | KCl |
| | 2.00 | Co-processed autolyzed yeast and (32%) KCl |
| 4 | 1.25% | NaCl |
| | 1.00 | KCl |
| | 0.65 | Co-processed autolyzed yeast and (32%) KCl |
| | 0.35 | Co-processed autolyzed yeast and (20%) $NH_4Cl$ |
| 5 | 1.25% | NaCl |
| | 0.60 | KCl |
| | 1.25 | Co-processed autolyzed yeast and (32%) KCl |
| | 1.00 | Co-processed autolyzed yeast and (20%) $NH_4Cl$ |

Fifteen frankfurters were skinned and boiled for five minutes. Flavor and texture were evaluated by four panelists:

| Batch number | |
|---|---|
| 1 | Good flavor, slightly tart, firmer texture than Number 5. |
| 2 | Two panelists said good flavor, the other two said metallic flavor; aftertaste. |
| 3 | Yeasty flavor, bad-off flavor, less salty than Number 4. |
| 4 | Good salt flavor, good overall flavor. |
| 5 | Cardboard tasting, yeasty, soft texture; one said saltiness okay and another disagreed. |

The frankfurters with the most acceptable flavor were Number 4 (1.25 percent NaCl, 1.00 percent KCl, 0.65 percent co-processed autolyzed yeast and (32%) KCl, and 0.35 percent co-processed autolyzed yeast and (20%) $NH_4Cl$).

Example IX

The following example illustrates the effect of the sodium chloride substitute system on microbial growth.

Frankfurters were prepared in the following manner using the frankfurter formula in Table III and the salt formulations in Table IV represented in terms of parts per 100 parts Meat Block by Weight.

1. The lean beef was ground through a 0.3 cm (1/8'') plate; the jowls and trim through a 1.3 cm (1/2'') plate.

2. Meats, salt, water/ice, dissolved nitrite and remaining ingredients were chopped until the temperature reached 7°C (45°F).

3. The mixture was run twice through an emulsifier having a 1.0 mm plate. The initial emulsion temperature was 7°C (45°F). The final emulsion temperature ranged between 64°—66°F (17.8—18.8°C).

4. The mixture was stuffed into casings (Union Carbide No. Jax, 27 mm) and linked.

5. The links were exposed to the following smokehouse process:

**0 103 994**

Fast air circulation

| | |
|---|---|
| 150°F (66°C) | 50 minutes |
| 160°/118°F (71°/48°C) | 30 minutes |
| 170°/128°F (77°/53°C)  ₀ | 30 minutes |
| 170°/steam to 152°F internal temperature | |
| Shower (77°/steam to 67°C) | |

6. The frankfurters were chilled and vacuum packaged.

### TABLE III
#### Frankfurter formula

| Ingredients<br>Meat block | Parts by weight |
|---|---|
| Lean beef (19% fat) | 52.2 |
| Pork jowls (65% fat) | 22.8 |
| Lean pork trim (15% fat) | 25.0 |
| | 100.0 |
| Water/ice | 30.0 |
| Corn syrup solids | 2.0 |
| Dextrose | 1.0 |
| Liquid frank seasoning | .45 |
| Liquid smoke | .125 |
| Garlic powder | .016 |
| Sodium erythorbate | .055 |
| Sodium nitrite | .016 |

### TABLE IV

| | 1 | 2 | 3 | 4 | 5 |
|---|---|---|---|---|---|
| Sodium chloride | 2.50 | — | 1.25 | 1.25 | 1.25 |
| Potassium chloride | — | — | 1.00 | 0.85 | 0.95 |
| 50/50 mixture of sodium chloride & potassium chloride | — | 2.50 | — | — | — |
| Co-processed autolyzed yeast and 32 percent KCl | — | — | 0.65 | 0.75 | 0.65 |
| Co-processed autolyzed yeast and 20 percent NH₄Cl | — | — | 0.35 | 0.40 | 0.40 |
| Autolyzed yeast | — | — | — | 0.20 | 0.30 |

Studies were performed by an independent research organization on relative microbial shelf life. The following results were observed.

**0 103 994**

| | Total surface count/gm (35C) | | | |
|---|---|---|---|---|
| | Week 0 | Week 2 | Week 4 | Week 6 |
| Formulation 1 | 300 | 800 | 54,000,000 | 4,200,000 |
| Formulation 2 | 200 | 400 | 50,000 | 3,400,000 |
| Formulation 3 | <100 | 200 | 100 | 1,900 |
| Formulation 4 | <100 | 100 | 560,000 | 61,000 |
| Formulation 5 | 100 | <100 | <100 | 1,100 |

The data indicates that the reduced-sodium frankfurters containing the co-processed blend of autolyzed yeast and ammonium chloride do not support bacterial growth above that of the control containing sodium chloride.

Example X

The following example gives the formula for a low sodium frankfurter utilizing the sodium chloride substitute system which has acceptable flavor and texture when prepared using the process outlined in Example IX.

Frankfurter formula
Percent of emulsion by weight

| | |
|---|---|
| Lean beef (15% fat) | 36.42 |
| Pork jowls (68% fat) | 20.50 |
| Lean pork trim (15% fat) | 16.06 |
| Water/ice | 21.90 |
| Corn syrup solids | 1.45 |
| Dextrose | 0.73 |
| Frank seasoning | 0.33 |
| Liquid smoke | 0.09 |
| Garlic powder | 0.01 |
| Sodium erythorbate | 0.045 |
| Sodium nitrite | 0.01 |
| Sodium chloride | 0.91 |
| Potassium chloride | 0.65 |
| Co-processed autolyzed yeast and 32 percent potassium chloride | 0.75 |
| Co-processed autolyzed yeast and 20 percent ammonium chloride | 0.15 |

## Claims

1. A composition comprising autolyzed yeast and ammonium chloride.

2. A composition according to Claim 1 wherein the ammonium chloride and autolyzed yeast are co-processed.

3. A composition according to Claim 2 wherein the co-processed ammonium chloride and autolyzed yeast is formed by adding ammonium chloride to a slurry of active yeast cells, followed by autolysis of the yeast.

4. A composition according to any preceding claim wherein the amount of autolyzed yeast relative to the amount of ammonium chloride is in the range from about 95 percent to about 60 percent by weight.

5. A composition according to Claim 4 wherein the amount of autolyzed yeast relative to the amount of ammonium chloride is 80 percent by weight.

6. A composition according to any preceding claim comprising potassium chloride, ammonium chloride and autolyzed yeast wherein the autolyzed yeast and ammonium chloride are present in a concentration sufficient to enhance the saltiness and decrease the bitterness of the potassium chloride.

7. A composition according to Claim 6 wherein the ammonium chloride and yeast are co-processed and the amount of potassium chloride relative to one part by weight of co-processed autolyzed yeast and ammonium chloride is in the range from about 0.5 to about 20 parts by weight.

8. A composition according to Claim 7 wherein the amount of potassium chloride relative to one part by weight of co-processed autolyzed yeast and ammonium chloride is in the range from about 0.75 to about 11.0 parts by weight.

9. A composition according to Claim 7 wherein the amount of potassium chloride relative to one part by weight of co-processed autolyzed yeat and ammonium chloride is 2.25 parts by weight.

10. The use of a composition according to any preceding claim as a food additive.

11. A foot product to which autolyzed yeast and ammonium chloride has been added in amounts sufficient to enhance the saltiness and decrease the bitterness.

12. A food product according to Claim 11 wherein the ammonium chloride and the autolyzed yeast are co-processed.

13. A food product according to Claim 12 wherein the amount of autolyzed yeast relative to the amount of ammonium chloride is in the range from about 95 percent to about 60 percent by weight.

14. A food product according to Claim 12 wherein the amount of autolyzed yeast relative to the amount of ammonium chloride is 80 percent by weight.

15. A low sodium processed meat product to which co-processed autolyzed yeast and ammonium chloride have been added in amounts sufficient to enhance the saltiness and decrease the bitterness of salt substitutes.

16. A method of co-processing autolyzed yeast and ammonium chloride wherein the ammonium chloride is added to a slurry or cream comprising active yeast cells in an amount effective to aid in plasmolysis of the cells.

**Patentansprüche**

1. Zubereitung, enthaltend autolysierte Hefe und Ammoniumchlorid.

2. Zubereitung nach Anspruch 1, dadurch gekennzeichnet, daß das Ammoniumchlorid und die autolysierte Hefe gemeinsam verarbeitet sind.

3. Zubereitung nach Anspruch 2, dadurch gekennzeichnet, daß das gemeinsam verarbeitete Ammoniumchlorid und die autolysierte Hefe durch Zugabe von Ammoniumchlorid zu einer Aufschlämmung von aktiven Hefezellen, gefolgt von Autolyse der Hefe, formiert wird.

4. Zubereitung nach einem der vorhergehenden Ansprüche, dadurch gekennzeichnet, daß die Menge der autolysierten Hefe im Verhältnis zu der Menge des Ammoniumchlorids im Bereich von etwa 95 bis etwa 60 Gewichtsprozent liegt.

5. Zubereitung nach Anspruch 4, dadurch gekennzeichnet, daß die Menge der autolysierten Hefe im Verhältnis zu der Menge des Ammoniumchlorids 80 Gewichtsprozent beträgt.

6. Zubereitung nach einem der vorstehenden Ansprüche, dadurch gekennzeichnet, daß sie Kaliumchlorid, Ammoniumchlorid und autolysierte Hefe enthält, worin die autolysierte Hefe und das Ammoniumchlorid in einer Konzentration zugegen sind, die ausreicht, den Salzgeschmack zu steigern und die Bitterkeit des Kaliumchlorids zu senken.

7. Zubereitung nach Anspruch 6, dadurch gekennzeichnet, daß das Ammoniumchlorid und die Hefe zusammen verarbeitet werden und die Menge an Kaliumchlorid im Verhältnis zu einem Gewichtsteil gemeinsam verarbeiteter autolysierter Hefe und Ammoniumchlorid im Bereich von etwa 0,5 bis etwa 20 Gewichtsteilen liegt.

8. Zubereitung nach Anspruch 7, dadurch gekennzeichnet, daß die Menge an Kaliumchlorid im Verhältnis zu einem Gewichtsteil an gemeinsam verarbeiteter autolysierter Hefe und Ammoniumchlorid im Bereich von etwa 0,75 bis etwa 11,0 Gewichtsteilen liegt.

9. Zubereitung nach Anspruch 7, dadurch gekennzeichnet, daß die Menge an Kaliumchlorid im Verhältnis zu einem Gewichtsteil an gemeinsam verarbeiteter autolysierter Hefe und Ammoniumchlorid 2,25 Gewichtsteile beträgt.

10. Verwendung einer Zubereitung nach einem der vorstehenden Ansprüche als Nahrungsmittelzusatz.

11. Nahrungsmittelprodukt, dadurch gekennzeichnet, daß dazu autolysierte Hefe und Ammoniumchlorid in Mengen zugesetzt wurden, die ausreichen, den Salzgeschmack zu steigern und die Bitterkeit zu senken.

12. Nahrungsmittelprodukt nach Anspruch 11, dadurch gekennzeichnet, daß das Ammoniumchlorid und die autolysierte Hefe gemeinsam verarbeitet sind.

11

13. Nahrungsmittelprodukt nach Anspruch 12, dadurch gekennzeichnet, daß die autolysierte Hefe im Verhältnis zu der Menge an Ammoniumchlorid im Bereich von etwa 95 bis etwa 60 Gewichtsprozent liegt.

14. Nahrungsmittelprodukt nach Anspruch 12, dadurch gekennzeichnet, daß die Menge an autolysierter Hefe im Verhältnis zur Menge an Ammoniumchlorid 80 Gewichtsprozent beträgt.

15. Fleischprodukt mit niedrigem Natriumgehalt, dadurch gekennzeichnet, daß dazu gemeinsam verarbeitete autolysierte Hefe und Ammoniumchlorid in Mengen zugesetzt wurden, die ausreichen, den Salzgeschmack zu steigern und die Bitterkeit von Salzersatzstoffen zu erniedrigen.

16. Verfahren zum gemeinsamen Verarbeiten von autolysierter Hefe und Ammoniumchlorid, dadurch gekennzeichnet, daß das Ammoniumchlorid zu einer Aufschlämmung oder Creme, enthaltend aktive Hefezellen in einer zur Unterstützung der Plasmolyse der Zellen wirksamen Menge zugesetzt wird.

**Revendications**

1. Composition comprenant de la levure autolysée et du chlorure d'ammonium.

2. Composition suivant la revendication 1, dans laquelle le chlorure d'ammonium et la levure autolysée sont traités simultanément.

3. Composition suivant la revendication 2, dans laquelle le chlorure d'ammonium et la levure autolysée traités simultanément sont formés par addition de chlorure d'ammonium à une bouillie de cellules de levure actives, suivie de l'autolyse de la levure.

4. Composition suivant l'une quelconque des revendications précédentes, dans laquelle la quantité de levure autolysée par rapport à la quantité de chlorure d'ammonium est dans l'intervalle d'environ 95% à environ 60% en poids.

5. Composition suivant la revendication 4, dans laquelle la quantité de levure autolysée par rapport à la quantité de chlorure d'ammonium est de 80% en poids.

6. Composition suivant l'une quelconque des revendications précédentes comprenant du chlorure de potassium, du chlorure d'ammonium et de la levure autolysée, dans laquelle la levure autolysée et le chlorure d'ammonium sont présents à une concentration suffisante pour augmenter le caractère salé et diminuer l'amertume du chlorure de potassium.

7. Composition suivant la revendication 6, dans laquelle le chlorure d'ammonium et la levure sont traités simultanément et la quantité de chlorure de potassium par rapport à une partie en poids de levure autolysée et de chlorure d'ammonium traités simultanément est dans l'intervalle d'environ 0,5 à environ 20 parties en poids.

8. Composition suivant la revendication 7, dans laquelle la quantité de chlorure de potassium par rapport à une partie en poids de levure autolysée et de chlorure d'ammonium traités simultanément est dans l'intervalle d'environ 0,75 à environ 11,0 parties en poids.

9. Composition suivant la revendication 7, dans laquelle la quantité de chlorure de potassium par rapport à une partie en poids de la levure autolysée et du chlorure d'ammonium traités simultanément est de 2,25 parties en poids.

10. Utilisation d'une composition suivant l'une quelconque des revendications précédentes comme additif alimentaire.

11. Produit alimentaire auquel de la levure autolysée et du chlorure d'ammonium ont été ajoutés dans des quantités suffisantes pour augmenter le caractère salé et réduire l'amertume.

12. Produit alimentaire suivant la revendication 11, dans lequel le chlorure d'ammonium et la levure autolysée sont traités simultanément.

13. Produit alimentaire suivant la revendication 12, dans lequel la quantité de levure autolysée par rapport à la quantité de chlorure d'ammonium est dans l'intervalle d'environ 95% à environ 60% en poids.

14. Produit alimentaire suivant la revendication 12, dans lequel la quantité de levure autolysée par rapport à la quantité de chlorure d'ammonium est de 80% en poids.

15. Produit à base de viande traitée à faible teneur en sodium, auquel on a ajouté de la levure autolysée et du chlorure d'ammonium traités simultanément dans des quantités suffisantes pour augmenter le caractère salé et réduire l'amertume des substituts du sel.

16. Procédé de traitement simultané de la levure autolysée et du chlorure d'ammonium dans lequel le chlorure d'ammonium est ajouté à une bouillie ou crème comprenant des cellules de levure actives dans une quantité efficace pour aider à la plasmolyse des cellules.